Europäisches Patentamt

European Patent Office

Office européen des brevets

(11) Publication number: **0 321 167**
**A2**

## (12) EUROPEAN PATENT APPLICATION

(21) Application number: **88311724.4**

(22) Date of filing: **12.12.88**

(51) Int. Cl.⁴: **F16N 11/04** , **F16N 19/00** , **F16D 65/22**

(30) Priority: **15.12.87 US 133004**

(43) Date of publication of application:
**21.06.89 Bulletin 89/25**

(84) Designated Contracting States:
**DE GB IT SE**

(71) Applicant: **LUCAS INDUSTRIES public limited company**
**Great King Street**
**Birmingham, B19 2XF West Midlands(GB)**

(72) Inventor: **Urban, John Arthur**
**331, Horseshoe Court**
**Plainwell Michigan 49080(US)**

(74) Representative: **Waite, Anthony William et al**
**MARKS & CLERK Alpha Tower Suffolk Street**
**Queensway**
**Birmingham B1 1TT(GB)**

(54) **Brake lubrication system.**

(57) A shoe drum brake actuator comprises a camshaft mechanism (34, 35) contained within an actuator housing (54) and a tubular member (36) which journals the camshaft. A lubricant fitting (14) permits lubricant to be introduced into both the tubular member and the actuator housing. In addition, an automatic adjuster is contained within an adjuster housing forming part of the actuator housing (54) and a pressure responsive valve (144) is provided to permit lubricant introduced through the lubricant fitting to be discharged from the adjuster housing, when a predetermined system lubricant pressure is attained. A compressible device (143) is contained within the actuator housing (54) to compensate for effective volume variations and precluding the exhaust of lubricant and the introduction of air during such changes.

FIG 2

## BRAKE LUBRICATION SYSTEM

This invention relates to a brake actuator incorporating a lubrication system and is particularly concerned with an improved system for lubricating the actuating mechanism of a cam actuated shoe drum brake.

It is common practice for brake actuating mechanisms to be provided with lubricating means which typically consist of one or more grease nipples through which grease may be injected into internal passageways which distribute the grease throughout the mechanism. In many commonly used actuating mechanisms, in which the principal force - applying means is in the form of a cam or wedge, the braking force is applied to one or more friction elements by way of sliding tappets which move between extended and retracted positions. Moreover, such tappets are often associated with automatic adjusters which operate to adjust the tappets outwardly in order to compensate for wear of the friction elements. Movement of the tappets during actuation and adjustment causes the internal volume of actuator housing to vary and the consequent pressure differences within the housing can lead to lubricant being forced from the housing, in the case of a decrease in housing volume, or to ingress of air to the housing, in the case of a volume increase, neither of which conditions is desirable.

An object of the present invention is to provide an improved brake actuator in which the aforesaid undesirable conditions are alleviated or avoided.

According to the invention, a brake actuator comprises a housing, force transmission means in the housing, a mechanical actuator operable via said force transmission means to apply a friction element to a rotary member to be braked, a cavity within said housing, means for the admission of lubricant into said cavity, relief means for emission of lubricant at a predetermined positive system lubricant pressure, and a compressible device acting in response to variations in the effective volume of said cavity during brake operation to maintain a positive system pressure in said cavity.

The invention will now be described, by way of example, with reference to the accompanying drawings in which:-

Figure 1 is an elevational view of one embodiment of an internal shoe drum brake incorporating one form of the actuator of the invention, with the drum removed to show the construction more clearly:

Figure 2 is a cross-sectional view taken along line 2-2 of Figure 1, and

Figure 3 is a cross-sectional view taken along the line 3-3 of Figure 1 showing part of the actuator in greater detail.

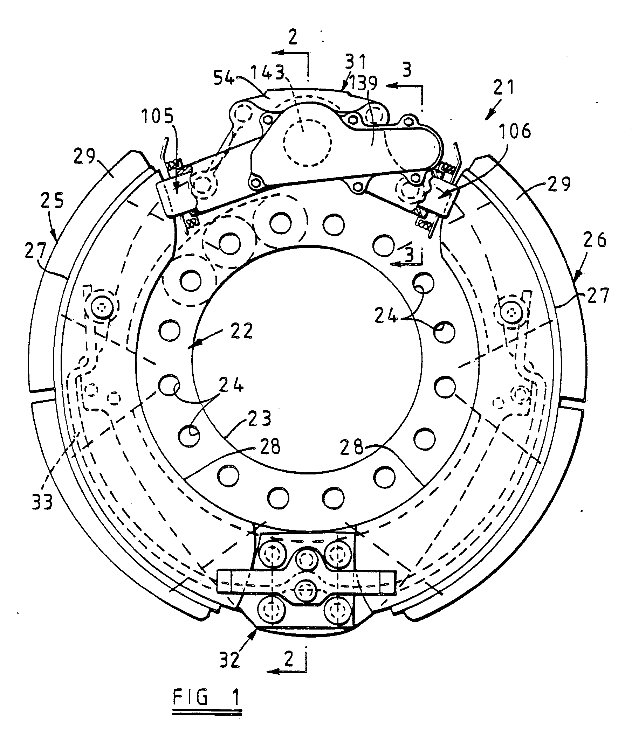

Referring to Figure 1, this shows an internal shoe drum brake designated generally by the reference numeral 21. The brake 21 has a backing or torque plate 22 in which is formed a central opening 23 defining a flange in which openings 24 are formed for mounting the backing plate 22 on an axle assembly (not shown) of a vehicle in a known manner. It should be understood that although the invention is described in connection with a vehicular application for the brake 21, the invention is susceptible for use in other applications.

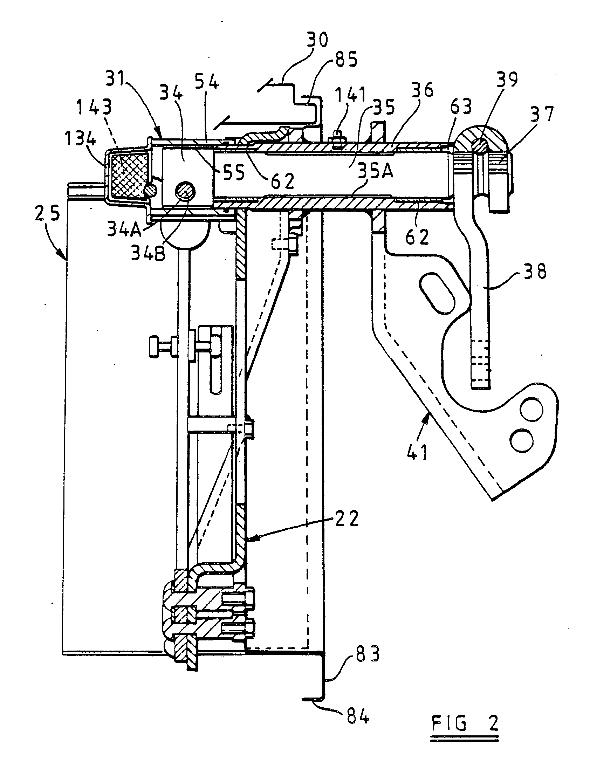

Slidably supported relative to the backing plate 22 in a manner to be described, are a pair of brake shoes 25 and 26, each of which includes platform 27 carrying a friction lining material 29 and a transversley extending web 28. When the brake shoes 25 and 26 are actuated, the friction linings 29 will move outwardly into frictional engagement with an associated brake drum (shown only partially in Figure 2 at 30) for braking rotation of the brake drum and an associated wheel.

An actuator mechanism, indicated generally by the reference numeral 31 is carried by the backplate for actuating the brake shoes 25 and 26 in a manner which will be described. The actuator mechanism 31 is interposed between one pair of adjacent ends of the brake shoe webs 28, and a fixed abutment assembly, indicated generally by the reference numeral 32, is disposed between the opposite pair of adjacent ends of the brake shoe webs 28.

A formed return spring, indicated generally by the reference numeral 33, is carried by the fixed abutment 32 and cooperates with the brake shoes 25 and 26 so as to urge the brake shoes 25 and 26 towards their released or retracted positions.

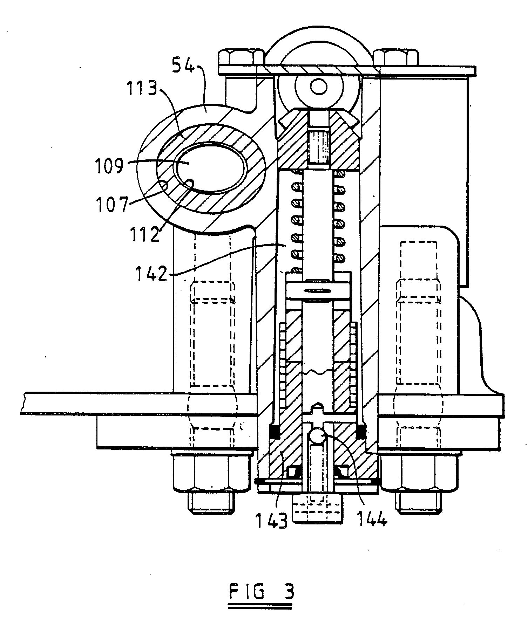

Referring now to Figures 2 and 3, the actuator 31 comprises a cam 34 that is fixed to or formed integrally with the camshaft 35 rotably supported within a tubular member 36 for rotation about an axis parallel to and offset from the axis of rotation of the associated brake drum 30. The camshaft 35 has a serrated or splined end portion 37 which extends outwardly from beyond the tubular member 36 on the side of the backing plate 22 away from the brake shoes 25 and 26, and an actuating lever 38 is fixed on this end portion 37 by means of clamping bolt 39.

A mounting bracket, illustrated in a non-functional position and indicated generally by the reference numeral 41, is provided for carrying a power unit (not shown) such as an air chamber device for operating the lever 38 and rotating the camshaft 35 to actuate the brakes, in a manner to be described. The mounting bracket 41 may be conveniently formed, for example by pressing, from sheet metal and has a flange 46 adapted to carry a power unit (not shown) in use which is connected to the lever 38 for actuating the lever 38 and camshaft 35 in known manner.

The cam 34 is contained within the actuator housing 54 in which the actuator mechanism 31 is contained. The actuator housing 54 is provided with a cylindrical bore 55 into which a reduced diameter end portion of the tubular member 36 opposite to the lever 38 is fitted. An O-ring seal 56 is contained at this joint to provide a fluid-tight seal.

A dirt shield, indicated generally by the reference numeral 83 is fixed to the rear surface of the backing plate 22. The dirt shield 83 has a re-entrant flange 84 that is adapted to receive the peripheral edge 85 of the brake drum 30, as shown in figure 2, so as to effect a relatively dirt-free assembly.

The tubular member 36 is then inserted over the camshaft 35 into the tight fitting bore of the backing plate 22 and into the bore 55 of the housing 54. It should be noted that the tubular member 36 is provided with spaced bushings or bearings 62 that rotatably journal the camshaft 35 at its opposite ends. In addition, a lip-type seal 63 is provided at the outer end of the tubular member 36 so as to prevent the ingress of foreign material to the interior of the housing assembly.

The cam 34 is provided at opposed locations thereon with a pair of pockets, one of which can be seen at 34A, each of which receives respective ends of struts, one of which is seen at 34B in the pocket 34A, each strut cooperating with respective actuator tappets 105 and 106. The actuator tappets 105 and 106 are associated with the webs 27 of the brake shoes 25 and 26 and are slidably supported in respective bores of the housing 54, one of which is seen at 107, for achieving brake actuation.

Each of the tappets 105 and 106 is of generally the same construction and comprises a first member 109 engaged at one end with one of the struts 34B and which has an externally threaded end portion received in an internally threaded bore 112 of a second tappet portion 113. Each tappet portion 113 has a cylindrical outer configuration that is slidably supported in the respective housing bore 107 and has a slotted end part that receives the adjacent end of the brake shoe webs 28.

Because of the cooperation of the slotted end portions of the tappet parts 113 with the brake shoe webs 28, the tappet portions 113 are held against rotation. The portions 109 are, however, rotatable so as to achieve adjustment for wear. An automatic adjusting mechanism is incorporated for achieving this adjustment and is not described in detail since it forms no part of the present invention.

In accordance with the invention, the entire actuator mechanism, including the adjuster, is lubricated by means of a single lubricant fitting in the form of a nipple 141 (Figure 2) that is provided in the projecting part of the tubular member 36. Grease or lubricant can be injected into the clearance 35A between the camshaft 35 and the tubular member 36 through this fitting. This grease can flow axially and enter the housing 54 past grooves in the bushing 62 so as to lubricate the actuating mechanism 31 contained therein. In addition, the lubricant can flow down into the adjuster mechanism as shown in figure 3. The housing 54 has a bore 142 which, in relation to Figure 1, extends rearwardly and generally perpendicular to the backplate 22 and contains certain unidentified adjuster components. The bore 142 also communicates with the entire interior of the housing 54. A plug 143 closes the lower end of the bore and houses a one-way check valve 144 provided at the lower end of the shaft 121 so as to permit the exit of excess lubricant when a predetermined lubricant pressure is attained in the housing 54. In addition, lubricant can exit the cam shaft portion through the seal 63 (Figure 2). However, it is preferred that the seal 63 will open at a higher pressure that the one-way check valve 144 so that grease will first exit through the check valve 144. However, any excessively high rate of pressure build-up will cause lubricant to exit also through the seal 63.

The effective cross-sectional area of the lubricant inlet fitting 141 is substantially less than the relief area provided for by the area of the one-way check valve 144 and the seal 63. As a result, it is ensured that there will not be an undesirable pressure increase in the internal volume of the actuator mechanism during lubrication with normal lubricating equipment.

A chamber is formed in the actuator 31 by the cover plate 139 and housing 54 and is at least partially filled with a compressible device illustrates as a closed cell foam body 143 which will be compressed upon lubricant introduction. As a result, increases in housing interior volume which occur during the outward movement of the tappets 105 and 106, during both brake actuation and adjustment, will cause the foam material 143 to expand in order to ensure the maintenance of a positive lubricant pressure. This, in turn, ensures that air and contaminants cannot enter the system and that full lubrication is maintained at all times.

Conversely, the foam body 143 contracts when the effective volume of the actuator housing decreases during tappet retraction and avoids the undesirable expulsion of lubricant from the system, which could occur upon an untoward increase in pressure .

The lubrication system described enables long-term lubrication to be achieved without the necessity for opening the system and this introduces the possibility for a system which may remain sealed during the expected operational life of the brake.

It should be understood that the foregoing description is that of the preferred embodiments of the invention and that various changes and modifications may be made without departing from the scope of the invention as defined in the appended claims. In particular, the foam body may be replaced by other forms of compressible device such a a spring-loaded diaphragm or piston. The illustrated camshaft may be replaced by alternative forms of mechanical actuator, such as a wedge device. Although the invention has been described in relation to a shoe drum brake, it is equally applicable to other forms of brake, such as a disc brake.

## Claims

1. A brake actuator comprising a housing (54), force transmission means (105, 106) in the housing, a mechanical actuator (31) operable via said force transmission means to apply a friction element (25, 26) to a rotary member (30) to be braked, a cavity within said housing (54), means (141) for the admission of lubricant into said cavity, relief means (144) for emission of lubricant at a predetermined positive system lubricant pressure, characterised by a compressible device (143) acting in response to variations in the effective volume of said cavity, during brake operation to maintain a positive system pressure in said cavity.

2. An actuator according to Claim 1, for an internal shoe drum brake, wherein a backing plate (22) is fixed relative to a rotatable drum to be braked and has a tubular member (36) secured thereto, a camshaft (35) is rotatably supported in said tubular member, said actuator housing (54) being fixed to one end of said tubular member, cam means (34) is fixed to the camshaft and extends at least partially into said housing cavity, and actuating means (105, 106) is movably supported within said housing (54), characterised in that said means (141) is arranged to admit lubricant into the interior of said tubular member around the camshaft for lubrication of the cam (34) and camshaft (35).

3. An actuator according to Claim 2, characterised in that said lubricant admission means (141) is carried by the tubular member (36).

4. An actuator according to any one of Claims 1 to 3 characterised in that said compressible device (143) is positioned within said housing cavity.

5. An actuator according to any one of Claims 2 to 4, characterised in that the relief means includes a lip seal (63) arranged to close an open end of the tubular member (36).

6. An actuator according to any one of Claims 1 to 5 characterised in that the relief means includes a check valve (144).

7. An actuator according to Claim 5 characterised in that the relief means includes a check valve (144) which opens at a lower system pressure than the lip seal (63) so that excess lubricant will first exit through the check valve.

8. An actuator according to any one of the preceding claims, characterised in that said compressible device is a body (143) of closed cell foam material.

9. An actuator according to any one of the preceding claims, wherein automatic adjustment means is provided for adjusting the positions of said force transmission means (105, 106), the adjustment means being contained within a part of said housing (54) communicating with said cavity.

10. An actuator according to Claim 9 characterised in that said compressible device is contained within the part of the housing (54) containing part of the adjuster.

EP 0 321 167 A2

FIG 1

FIG 2

FIG 3